Europäisches Patentamt

European Patent Office

Office européen des brevets

(11) Veröffentlichungsnummer: **0 166 414**
**B1**

(12) **EUROPÄISCHE PATENTSCHRIFT**

(45) Veröffentlichungstag der Patentschrift: **18.04.90**

(51) Int. Cl.⁵: **E 06 B 3/62**

(21) Anmeldenummer: **85107817.0**

(22) Anmeldetag: **24.06.85**

(54) Rahmenbauteil.

(30) Priorität: **28.06.84 DE 3423913**

(43) Veröffentlichungstag der Anmeldung:
**02.01.86 Patentblatt 86/01**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**DE-A-2 347 006**
**DE-A-2 903 464**
**DE-A-3 010 454**
**GB-A-1 174 093**
**GB-A-2 110 285**
**NL-A-7 211 692**
**NL-A-8 201 884**

(73) Patentinhaber: **Gebrüder Kömmerling**
**Kunststoffwerke GmbH**
**Zweibrücker Strasse 200**
**D-6780 Pirmasens (DE)**

(72) Erfinder: **Vogel, Willibald**
**Markgrafenstrasse 3**
**D-6781 Petersberg (DE)**

(74) Vertreter: **Dipl.-Ing. Schwabe, Dr. Dr. Sandmair,**
**Dr. Marx**
**Stuntzstrasse 16 Postfach 86 02 45**
**D-8000 München 86 (DE)**

Courier Press, Leamington Spa, England.

**Beschreibung**

Die Erfindung betrifft ein Rahmenbauteil mit eingesetzter Füllung für Fenster- oder Türrahmen aus an den Ecken ineinander verbundenen Hohlprofilstäben der im Oberbegriff des Anspruchs 1 angegebenen Gattung.

Ein solches Rahmenbauteil geht aus der DE—A—23 47 066 hervor und weist eine vorzugsweise an der Rahmen-Außenseite angeordnete Rippe und eine nachträglich, vorzugsweise an der Rahmen-Innenseite, in diesem eingesetzte Kunststoff-Halteleiste, insbesondere aus schlagzähem Hart-PVC, zur Halterung der Füllung, z.B. einer Glasscheibe, auf, wobei sowohl die Rippe als auch die Halteleiste mit jeweils einer nachgiebigen Dichtung unter Vorspannung an der Füllung anliegen; die Dichtung der Halteleiste ist mit dieser koextrudiert, während die Dichtung der Rippe in eine entsprechende Nut eingesetzt ist und ein Profil hoher Nachgiebigkeit aufweist, das im wesentlichen auf Biegung beansprucht ist.

Weiterhin geht aus der GB—A—1 174 093 und der NL—A—8201884 eine Dichtleiste mit gerippter Oberfläche hervor. Auch die NL—A—7211692 zeigt eine Dichtleiste mit gerripter Oberfläche aus einem elastomeren Material, insbesondere Ethylenvinylacetat-Copolymer.

Die bei einem solchen Rahmenbauteil verwendeten Dichtungen haben einen sehr großen Verformungsweg und sind daher auch geeignet, relativ große Maßabweichungen in der Dicke der Fassung und in den entsprechenden Abmessungen des Rahmens und der Füllung aufzunehmen.

Thermoplastische Materialien, insbesondere weichmacherhaltige Thermoplaste neigen jedoch nach längerer Belastung dazu, durch Verformung verursachte höhere Spannungen abzubauen, so daß die bekannte Dichtung nicht mehr mit ausreichender Verspannung an der Füllung anliegt. Damit wird nicht nur die Dichtwirkung beeinträchtigt, weil eine solche lose anliegende Dichtungslippe von Feuchtigkeit unterkrochen werden kann. Darüberhinaus ist die bekannte Dichtung auch nicht mehr im Stande, die Füllung, die oft erhebliche Kräfte (z.B. Windkräfte) aufnehmen muß, in ihrer Lage zu halten.

Der Erfindung liegt deshalb die Aufgabe zugrunde, ein Rahmenbauteil der angegebenen Gattung zu schaffen, bei dem das Nachlassen der Andruckkraft der Dichtungen bzw. damit verbunden das Lockern der Füllung vermieden oder zumindest auf ein unschädliches Maß reduziert ist.

Diese Aufgabe wird erfindungsgemäß durch die im kennzeichnenden Teil des Anspruchs 1 angegebenen Merkmale gelöst.

Zweckmäßige Ausführungsformen werden durch die Merkmale der Unteransprüche definiert.

Die mit der Erfindung erzielten Vorteile beruhen daraus, daß die Dichtung der Halteleiste nicht mit, wie bisher, nur mehr auf Biegung und damit hochbelasteten, nachgiebigen Dichtungslippen ausgestattet wird, sondern als eine gerippte, im wesentlichen auf Druck beanspruchte Auflage ausgebildet ist, wird beim Einbau der Füllung nur wenig verformt wird. Die entstehenden Spannungen sind gering und werden dementsprechend nur in geringem Maße abgebaut. Dementsprechend ist auch der bleibende Anteil der Verformung gering, und das Nachlassen der Andruckkraft bleibt in einem Bereich, in dem es von der gegenüberliegenden, dauerelastischen Dichtung leicht aufgenommen werden kann. Letztere ist so ausgebildet, daß sie ein hohes Maß an Zusammendrückbarkeit mit einer flachen Federkennlinie vereinigt.

Durch die Verweidung der hohen Biegespannung, durch die nur verhältnismäßig geringe Verformung in Druckrichtung sowie durch die Wahl geeigneter Querschnitte, welche die Druckfestigkeit des thermoplastischen Dichtungsmaterials gewährleisten, ist sichergestellt, daß sich das Verhalten der thermoplastischen Dichtung während deren Betriebslebensdauer nicht unzulässig stark verändert.

Der erforderliche Ausgleich für Toleranzen sowie die notwendige Vorspannung werden von der anderen Seite der Füllung her dadurch erreicht, daß die Dichtung an der Rippe als ein Profil mit hoher Nachgiebigkeit ausgebildet ist, welches im wesentlichen auf Biegung beansprucht ist. Diese Dichtung hält die erforderliche Vorspannung aufrecht, da sie, wie oben erwähnt, nicht aus thermoplastischem Material, sondern aus einem dauerelastischen Elastomer hergestellt ist.

Die Dichtung der Halteleiste bildet somit lediglich einen Anschlag, der nur soweit verformbar sein muß, daß Unebenheiten in der Oberfläche der Füllung und Halteleiste ausgeglichen werden und die notwendige Dichtigkeit erzielt wird.

Soweit der erfindungsgemäße Rahmen an einer Gebäudeaußenseite angebracht wird, ist bevorzugt die Halteleiste mit ihrer Dichtungsauflage gebäudeinnenseitig angeordnet.

Gemäß einer Ausgestaltung der Erfindung ist die Dichtungsauflage flach ausgebildet und mit massiven, zur Füllung hin vorspringenden Längswülsten versehen. Diese können ein stumpfes, dach- oder sägezahnförmiges Profil aufweisen. Vorzugsweise ist das Wulstprofil gerundet. Das Profil muß so gedrungen sein, daß das Umknicken freier Kanten der Wülste in jedem Falle vermieden wird, un das Auftreten von Biegebelastungen und somit hohen Spannungen zu vermeiden. Daher sind bevorzugt freie Kanten der Längswülste stark abgerundet. Ein im Prinzip kreissegment- bis halbkreisförmiges Profil ist in Bezug auf die Extrusion von Vorteil und erlaubt einegünstige Spannungsverteilung.

Durch die Ausbildung dieser Längswülste werden, wenn diese ihrerseits gegen die Füllung anliegen, die im thermoplastischen Material auftretenden an sich schon niedrigen Druckspannungen in Richtung zur Halteleiste hin schnell kleiner und sind so gering, daß das thermoplastische Material nicht mehr fließt, die Spannung also bleibt.

Der Scheitelwinkel der genannten Längswülste beträgt hierbei bevorzugt nicht weniger als 60°.

Vorzugsweise sind zwei Wülste vorgesehen. Haben die Wülste Sägezahnprofil, so wird dieses vorzugsweise so angeordnet, daß die flacher abfallende Flanke des Wulstes jeweils von der Mitte der Füllung weg weist, so daß die steiler abfallende Flanke dieser Mitte zugewandt ist. Hierdurch wird die Dichtungswirkung der Längswülste verbessert.

Gemäß einer weiteren bevorzugten Ausgestaltung der Erfindung ist an der der Mitte der Füllung zugewandten Kante der Dichtung der Halteleiste eine herkömmlich geformte Dichtungslippe angeordnet, welche ihrerseits der Mitte der Füllung zugewandt ist und mit ihrem von der Halteleiste entfernten Ende gegen die Füllung anliegt. Ein solcher aus thermoplastischem Material gebildeter, lid- oder lippenförmiger Dichtungsstreifen ist im Prinzip auf Biegung belastet, so daß der beschriebene Spannungsabbau in dem Material dieses Streifens stattfinden kann. Dies ist aber unschädlich, da, wie bereits ausgeführt, die thermoplastische Dichtungsauflage nicht als Toleranzausgleich, sondern als nur begrenzt nachgiebiger Anschlag wirkt, so daß auch eine weitgehend spannungsfreie, satte Anlage des lippenförmigen Streifens gegen die Füllung ausreicht, um eine zusätzliche Dichtung zur Erhöhung der Sicherheit zu bilden. Hierbei bildet also die Dichtungsauflage im Gegensatz zu ihrer konventionellen Bezeichnung nur noch im Nebeneffekt eine Dichtung. Ihre Hauptaufgabe ist die Bildung eines Widerlagers für die Füllung. Die Dichtung im funktionellen Sinne übernimmt die Lippe.

Die Längswülste können, wie oben erwähnt, auch ein Dachprofil aufweisen, obwohl dann sich ein zur Mitte der Füllung öffnender Keilspalt zwischen Wulstflanke und Füllung gebildet ist. Insbesondere wenn diese dachförmige Ausbildung der Längsleisten mit der Anordnung einer Dichtungslippe zusammentrifft, wird jedoch von dieser die Dichtungsfunktion übernommen.

Die Lippe kann an einer geeigneten Stelle der Halteleiste und getrennt von der Dichtungsauflage mit der Leiste koextrudiert werden; bevorzugt bilden jedoch Dichtungsauflage und Lippe gemeinsam eine einzige Dichtung, um die Herstellung zu vereinfachen.

Die an der Füllung anliegende Oberfläche der Dichtungsauflage kann auch in Form von z.B. drei Rippen oder auch nur einer Rippe ausgebildet werden, vorausgesetzt, die Oberfläche ist so gestaltet, daß die Auflage beim Zusammengedrücktwerden durch Anlage an der Füllung bereits nach kurzem Verformunsweg nicht mehr weiter nachgibt, weil bereits in geringem Abstand von der zuerst mit der Füllung in Berührung kommenden Scheiteln der Rippen oder Wülste der belastete Materialquerschnitt so groß wird, daß die Druckspannung entsprechend klein wird.

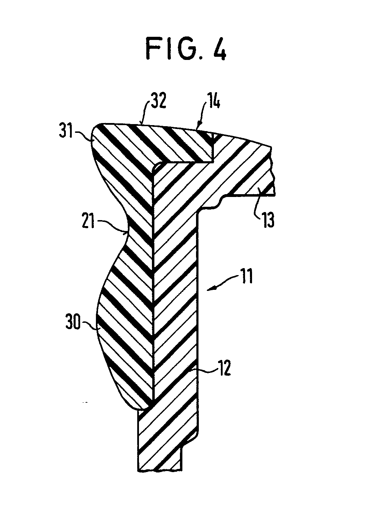

Sind mehrere Wülste vorgesehen, so kann—z.B. gemäß Fig. 4—der der Füllungsmitte nahegelegene Wulst zugleich als Dichtung ausgebildet und dementsprechend am der Füllungsmittel naheliegenden Rand des Dichtungsstreifens angeordnet sein.

Der an der Füllung anliegende Abschnitt des Hohlprofilschlauches sorgt für die Abdichtung, während die sich zwischen Füllung und Rippe erstreckenden Abschnitte auf Biegung belastet sind und damit eine hohe Verformung zulassen, ohne daß die die Verformung erzeugende Anlagekraft der Füllung sehr groß werden müßte.

Es kann von Vorteil sein, diesen Hohlprofilschlauch durch einen Quersteg auszusteifen, der vorzugsweise schräg zur Richtung der Kompression verläuft.

Zur besseren Abdichtung ist ferner gemäß einer weiteren Ausgestaltung auch am Hohlprofilschlauch mindestens eine Dichtungslippe angeformt, die sich zur Mitte der Füllung hin erstreckt.

Da die in die Rippe eingeschobene Dichtung bevorzugt wetterseitig angeordnet ist, wird durch die zusätzliche Dichtung verhindert, daß Wasser in den Bereich des gegen die Füllung anliegenden Hohlprofilschlauches gelangt, der sich seinerseits beim Auftreten von Toleranzen verformt.

Die verwendeten Materialen schließen jede Versprödung und damit einen Abfall der Haftung an der Halteleiste aus und gewährleisten gleichzeitig hohe Standfestigkeit und Elastizität. Insbesondere die Rückstellelastizität erfüllt alle gestellten Anforderungen.

Ferner ist bei dieser Zusammensetzung auch ohne weitere ein Verschweißen des Materials möglich, da hierbei keine Weichmacherverdampfung und somit auch keine Versprödung auftreten kann. Es können somit problemlos Halteleisten beliebiger Länge zusammen- und auch in der Gehrung verschweißt werden.

Zur weiteren Verbesserung der Alterungsbeständigkeit und Rückstellfähigkeit sowie zur Einfärbung dienen die angegebenen Zuschlagstoffe.

Die bevorzugte Ausführungsform der Erfindung ist anhand der beigefügten, schematischen Zeichnung als erläuterndes Beispiel beschrieben. In dieser zeigen:

Fig. 1 den Querschnitt durch einen Rahmenstab des erfindungsgemäßen Rahmens, etwa in natürlicher Größe;

Fig. 2 die Einzelheit A der Fig. 1 in vergrößertem Maßstab;

Fig. 3 eine andere Ausführungsform der in Fig. 2 gezeigten Ausbildung, und

Fig. 4 eine dritte Ausführung derselben.

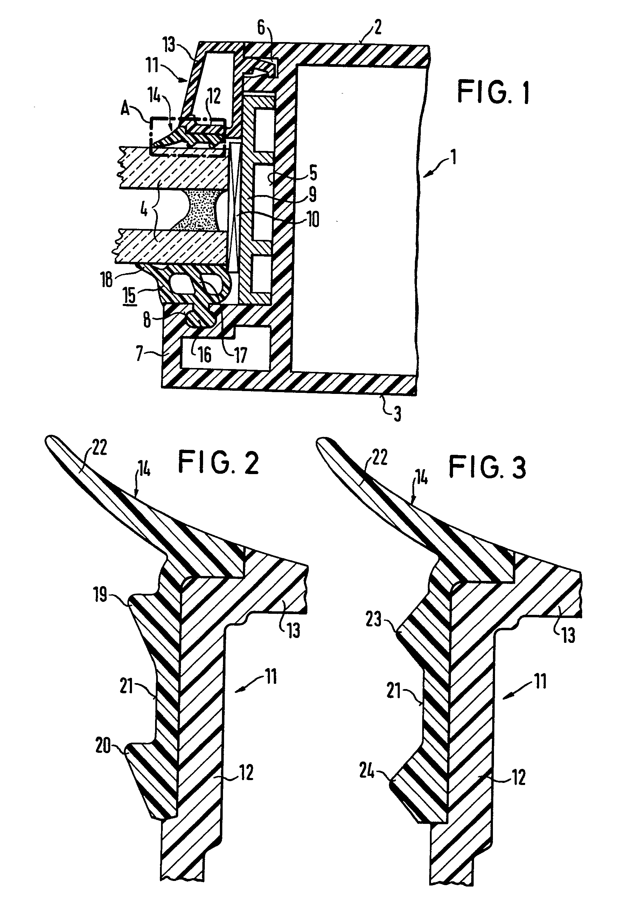

Der in Fig. 1 gezeigte, stark schematisierte Rahmenstab weist einen Kunststoffhohlprofilstab 1 auf, der eine gebäudeinnenseitige Oberfläche 2 und dieser gegenüberliegend eine gebäudeaußenseitige Oberfläche 3 aufweist, sowie eine der als Doppelglasscheibe 4 ausgebildeten Füllung zugewandte Querfläche 5.

Nahe der Oberfläche 2 ist der Rahmenstab 1 in Richtung zur Glasscheibe 4 um einen überstehenden Steg verlängert, in welchem eine vom Stab 1 wegweisende Aufnahmenut 6 ausgebildet ist.

An der Außenseite 3 ist der Rahmenstab 1 in Richtung zur Doppelglasscheibe 4 um eine weit überstehende Rippe 7 verlängert, welche eine zu den Flächen 2, 3 parallele und der Glasscheibe 4 zugewandte Fläche aufweist, in welcher eine weitere Aufnahmenut 8 ausgebildet ist.

Die der Glasscheibe 4 zugewandte, zwischen dem die Nut 6 aufweisenden Steg und der Rippe 7 angeordnete Vertiefung ist durch einen eingelegten Profilstab 9 ausgefüllt; zwischen dessen der Glasscheibe 4 zugewandter Oberfläche und dieser ist eine Toleranzen ausgleichende Einlage 10 vorgesehen.

In die Aufnahmenut 6 ist eine Halteleiste 11 eingeschoben, die als Hohlprofilstab ausgebildet ist. Eine der Seitenwände dieser Halteleiste 6 liegtgegen die Oberfläche des Steges des Stabes 1 sowie gegen die Oberfläche des Stabes 9 an und weist einen in die Aufnahmenut 6 eingreifenden Verankerungssteg auf. Eine weitere Wand der Halteleiste 11 erstreckt sich rechtwinkelig zur letztgenannten Wand und bildet mit der Fläche 2 des Stabes 1 eine bündige Innenfläche. Die der Glasscheibe 4 zugewandte Wand 12 der Halteleiste erstreckt sich etwa parallel zur Glasscheibe 4 und ist etwas länger als die in die Innenfläche 2 des Stabes 1 bündig übergehende Wand, so daß die der Füllung zugewandten Kanten der letztgenannten Wand sowie der Wand 12 durch eine schräg zur Glasscheibe 4 hinlaufende vierte Wand 13 miteinander verbunden sind.

Insoweit ist die als Ausführungsbeispiel beschriebene Konstruktion bekannt.

Die Wand 12 weist an ihrer der Glasscheibe 4 zugewandten Oberfläche eine Abstufung auf, in der sich eine koextrudierte, nachgiebige Dichtungsauflage 14 erstreckt, die auch noch in die Wand 13 übergeht.

Die Dichtungsauflage 14 und die angrenzenden Wände 12, 13 der Halteleiste 11 sind mit A bezeichnet und in vergrößertem Maßstab in Fig. 2 bzw.—in einer anderen Ausführungsform—in Fig. 3 dargestellt, welche weiter unten beschrieben werden.

Die Dichtungsauflage 14 bildet zur Innenseite des Rahmens hin einen nur begrenzt nachgiebigen Endanschlag für die Glasscheibe 4 mit steil nach oben gekrümmter Federkennlinie.

Zwischen der Außenseite dieser Glasscheibe 4 und der dieser zugewandten Oberfläche der Rippe 7 des Stabes 1 ist ein APTK-Schlauch 15 eingelegt, der zwischen den genannten Flächen zu einer ovalen Form zusammengedrückt ist. Die Federkennlinie für die Zusammendrückbewegung dieses Schlauches steigt flach an.

An seiner der Rippe 7 zugewandeten Seite weist der Schlauch 15 einen Befestigungssteg mit pilzartigem Querschnitt auf, der passend in die dort in der Rippe 7 ausgesparte Aufnahmenut 8 eingeschoben ist.

Dieser Steg 16 ist quer durch den Innenraum des Schlauches 15 hindurch unter Bildung eines schräg verlaufenden Querstegs 17 verlängert.

An dem Bereich des Schlauches 15, der der Glasscheibe 4 zugewandt und vom Stab 1 abgewandt ist, ist eine elastisch gegen die Glasscheibe 4 angedrückte Dichtungslippe 18 ausgebildet.

In Fig. 2 ist die Einzelheit A der Fig. 1 in größerem Maßstab dargestellt.

In Fig. 2 ist die Einzelheit A der Fig. 1 in größerem Maßstab dargestellt.

Wie ersichtlich, ist die Dichtungsauflage 14 in eine Abstufung sowohl der Wand 12 als auch der Wand 13 eingelassen, wobei durch entsprechende Kröpfungen dafür gesorgt ist, daß die Wände 12, 13 im wesentlichen durchgehend die gleiche Wandstärke aufweisen.

Die Dichtungsauflage 14 weist einen Abschnitt auf, der durch Koextrusion mit der Wand 12 verbunden ist und dessen der Glasscheibe 4 zugewandte Oberfläche 21 parallel zur Wand 12 verläuft.

Von dieser Oberfläche 21 ausgehend ragen zwei Längswulste ab, die ein etwa sägezahnförmiges Profil aufweisen, mit jeweils einer sich etwa rechtwinklig zur Oberfläche 21 erstreckenden Flanke, welche der noch weiter unten zu beschreibenden Dichtungslippe 22 zugewandt ist, sowie jeweils einer in die entgegengesetzte Richtung weisenden, flach zur Oberfläche 21 abfallenden Flanke. Der Winkel zwischen den beiden Flanken beträgt etwa 70°, die der Glasscheibe 4 zugewandte Kante der beiden Längswülste 19, 20 ist jedoch stark abgerundet.

Die Höhe der beiden Längswülste 19, 20 über der Oberfläche 21 entspricht etwa der Dicke der Dichtungsauflage 14 zwischen dieser Oberfläche 21 und der Wand 12 der Halteleiste 11.

Die Breite der beiden Längswülste, in Höhe der Oberfläche 21 gemessen, sowie der gegenseitige Abstand betragen etwas mehr als das Doppelte der Dicke der Dichtungsauflage 14, zwischen der Oberfläche 21 und der Wand 12 der Halteleiste 11 gemessen.

Die Höhe der Längswülste beträgt bevorzugt etwa 1,25 mm, die Breite etwa 3 mm.

Am Übergang zwischen den Wänden 12 und 13 der Halteleiste 11 ist eine lange, sich von diese Übergangsbereich aus in Richtung zur Mitte der Glasscheibe hin verjüngende Dichtungslippe 22 angeformt, die in Fig. 2 in ihrer Ruhelage gezeigt ist, in welcher sie die Verbindungslinie zwischen den freien Kanten der Längswülste 19, 20 weit überragt. Im zusammengebauten Zustand (vgl. Fig. 1) ist diese Dichtungslippe 22 jedoch stark verformt (in Fig. 2 und 3 nach oben), wobei sie dichtend gegen die Glasscheibe 4 anliegt, deren der Dichtungslippe 22 zugewandte Oberfläche auf den auch dann nur wenig zusammengedrückten Längsleisten 19, 20 aufliegt und somit mit der oben genannten Verbindungslinie etwa zusammenfällt.

Die Ausführungsform der Fig. 3 stimmt im wesentlichen mit jener der Fig. 2 überein, mit der Ausnahme, daß (bei beibehalten Gesamtabmessungen) die Längswülste 23, 24 nicht mehr sägezahnförmig ausgebildet sind, wie die Längsleisten 19, 20, sondern dachförmig, wobei sie den Querschnitt eines flachen, gleichschenkeligen, an seiner Spitze stark abgerundeten Dreiecks aufweisen.

Fig. 4 zeigt eine Ausführungsform der anextrudierten auf Druck beanspruchten Dichtungsauflage, bei welcher die Liddichtung 22 nicht vorhanden ist. Bei der Dichtung gemäß Fig. 4 ist die Dichtungsauflage 21 ebenfalls mit zwei Rippen oder Wülsten 30 und 31 versehen. Die Rippe 30 tritt hierbei als flach gewölbter Rücken in Erscheinung, der sich nahe der Höhenmitte der Dichtung 21 erstreckt, während die zweite Rippe 31 ähnlich wie die Rippen 20 und 19 gemäß Fig. 2 geformt ist und sich am oberen Rand befindet, so daß die freie gerundete Kante der Dichtung 31 auch die Aufgabe der Liddichtung 22 mit übernimmt.

Um letzteres zu gewährleisten, ist die Rippe 31 etwas steiler und höher als die Rippe 30, so daß die Rippe 31 auf jeden Fall in Anlage an der Füllung 4 kommt.

Damit die Beanspruchung der Rippe 31 im wesentlichen ebenfalls eine Druck- und keine Biegebeanspruchung ist, ist die obere Begrenzungsfläche 32 der Dichtung fast waagerecht angeordnet.

Zur Herstellung der Dichtungsauflage 14 wurde nachchloriertes Polyethylen verwendet (CPE), und zwar mit 30 bis 42% Chlorgehalt. Dieses Material hat alleine eine Shore-A-Härte von ca. 55 (DIN 53505, 10s).

Das CPE wird zum Erhalt einer befriedigenden Rückstellelastizität mit Nitril-Kautschuk NBR mit einem Verhältnis zwischen Butadien und Acrylnitril von 55 zu 45 bis 82 zu 18 (vorzugsweise 67 zu 33) gemischt. Da durch den Zusatz eines Nitrilkautschuks die Shore-Härte noch nicht ausreichend erhöht wird, wird der Mischung noch Polyvinylchlorid mit einem K-Wert von 58 bis 78 (vorzugsweise 70) mit einer Weichmacheraufnahme von mindestens 30% (DIN 53417, Teil 1) zugesetzt.

Die so erhaltene Mischung wird mit den üblichen PVC-Stabilisatoren versetzt und erhält vorzugsweise noch Füllstoff wie Kreide und entsprechende Pigmente zur gewünschten Farbeinstellung.

Als Zuschlagstoffe werden verwendet 0 bis 0,5 Teile Azodicarbonamid, 0 bis 20 Teile Calciumcarbonat, ungecoatet, 1,5 bis 2,5 Teile Barium-Cadmium-Laurat und/oder Barium-Cadmium-Stereat und/oder Barium-Cadmium-Myristinat, 0,4 bis 0,6 Teile organisches Phosphit als Co-Stabilisator zu den oben genannten Bariumverbindungen, mit einem Brechungsindex $nD^{20}=1{,}515$ bis 1,525, und 1 bis 2 Teile epoxidiertes Sojabohnenöl.

Für schwarze Farbe werden 0,5 bis 1,5 Teile Flammruß oder Gasruß zugesetzt, während für eine weisse Farbe 4 bis 8 Teile Titandioxid des Rutiltyps zugesetzt werden. Dieses Material wurde einem Koextrusionswerkzeug zugeführt, gemeinsam mit einem Hart-PVC-Compound, welcher CPE als Schlagzähkomponente enthielt. Das Koextrudat wurde kalibriert und erhielt die aus der Ziechnung ersichtliche Formgebung.

Das Material der Dichtungsauflage hatte die folgenden mechanischen Werte:

| | | |
|---|---|---|
| Shore A | 70 bis 72 | DIN 53505 |
| Zugfestigkeit | 13 N/mm² | DIN 53455 |
| Bruchdehnung | 1000% | DIN 53455 |
| Druckverformungs-rest 22h/70°C 25% Verformung | 65% | DIN 53517. |

Die Abreißfestigkeit der koextrudierten Dichtungsauflage von der Halteleiste beträgt mehr als 70 N/m³.

Die erfindungsgemäße Anordnung wurde im Zusammenhang mit einem Tür- oder Fensterrahmen beschrieben, kann aber auch in anderem Zusammenhang verwendet werden, z.B. bei Raumteilern, die wie ein Türflügelrahmen aus Kunststoffhohlprofilstäben und einer Füllung aufgebaut sind.

Schließlich sei zum besseren Verständnis der Erfindung noch darauf hingewiesen, daß bei dieser die Zusammendrückung der Dichtung 15 bei der Montage der Doppelscheibe 4 etwa das acht- bis zwölffache der Zusammendrückung der Dichtungsauflage 21 beträgt.

## Patentansprüche

1 Rahmenbauteil (1) mit eingesetzter Füllung (4) für Fensteroder Tür-Rahmen aus an den Ecken miteinander verbundenen Hohlprofilstäben (1),

mit einer vorzugsweise an der Rahmen-Außenseite angeordneten Rippe (7) und einer nachträglich, vorzugweise an der Rahmen-Innenseite, in diesen eingesetzten Kunststoff-Halteleiste (11), insbesondere aus schlagzähem Hart-PVC, zur Halterung der Füllung (4), z.B. einer Glasscheibe (4),

wobei sowohl die Rippe (7) als auch die Halteleiste (11) mit jeweils einer nachgiebigen Dichtung (14, 15) unter Vorspannung an der Füllung (4) anliegen, und

wobei die Dichtung (14) der Halteleiste (11) mit dieser koextrudiert ist,

während die Dichtung (15) der Rippe (7) in eine entsprechende Nut (8) eingesetzt ist, und ein Profil hoher Nachgiebigkeit aufweist, das im wesentlichen auf Biegung beansprucht ist,

gekennzeichnet durch die folgenden Merkmale:

die Dichtung der Halteleiste (11) ist als an ihrer der Füllung (4) zugewandten Oberfläche gerippte, im wesentlichen auf Druck beanspruchte Auflage (14) der Halteleiste (11) von geringer Nachgiebigkeit ausgebildet;

die in die Rippe (7) eingeschobene Dichtung (15) ist als Hohlprofilschlauch (15) ausgebildet;

der Hohlprofilschlauch (15) besteht aus synthetischem Kautschuk mit hoher elastischer Nachgiebigkeit, insbesondere aus APTK;

die mit der Halteleiste (1) koextrudierte Dichtungsauflage (14) besteht aus den folgenden Materialen:

a) 40 bis 60 Teile, insbesondere 50 Teile, chloriertes Polyethylen mit einem Chlorgehalt von 30 bis 42%, insbesondere 36%,

b) 20 bis 30 Teile Polyvinylchlorid mit einem K-Wert von 58 bis 78, vorzugsweise 70, und einer Weichmacheraufnahme von mindestens 30% (nach DIN 53417, Teil 1), und

c) 20 bis 30 Teile Nitrilkautschuk NBR mit einem Verhältnis von Butadien und Acrylnitril von 55 zu 45 bis 82 zu 18, insbesondere 67 zu 33.

2. Bauteil nach Anspruch 1, dadurch gekennzeichnet, daß die Dichtungsauflage (14) der Halteleiste (11) flach ausgebildet ist und an ihrer der Füllung (4) zugewandten Fläche (22) mindestens einen, vorzugsweise zwei massive Längswülste (19, 20, 23, 24, 30, 31) aufweist.

3. Bauteil nach Anspruch 2, dadurch gekennzeichnet, daß die Längswülste (19, 20, 23, 24, 31) dach- oder sägezahnförmiges Profil aufweisen, dessen der Füllung (4) zugewandte Kante bevorzugt abgerundet ist und dessen Flanken einen Winkel einschließen, der nicht kleiner als etwa 60° ist.

4. Bauteil nach Anspruch 2, dadurch gekennzeichnet, daß das Profil (30) des bzw. jedes Längswulstes gerundet ist.

5. Rahmen bauteil nach einem der Ansprüche 1 bis 4, dadurch gekennzeichnet, daß an der vom zugehörigen Rahmenstab (1) abgewandten Seite der Halteleiste (11) zusätzlich eine nachgiebige, gegen die Füllung (4) anliegende Lippe (22) angeformt ist.

6. Rahmen bauteil nach einem der Ansprüche 1 bis 5, dadurch gekennzeichnet, daß an der vom zugehörigen Rahmenstab (1) abgewandten Seite des Hohlprofilschlauches (15) mindestens eine gegen die Füllung (4) anliegende Dichtlippe (18) angeformt ist.

7. Rahmen bauteil nach einem der Ansprüche 1 bis 6, dadurch gekennzeichnet, daß die mit der Halteleiste (11) koextrudierte Dichtung (14) mindestens einen der nachfolgenden Zuschlagstoffe enthält:

d) 0 bis 0,5 Teile Azodicarbonamid,

e) 0 bis 20 Teile Calciumcarbonat, ungecoatet,

f) 1,5 bis 2,5 Teile Barium-Cadmium-Laurat und/oder Barium-Cadmium-Steareat und/oder Barium-Cadmium-Myristinat,

g) 0,4 bis 0,6 Teile organisches Phosphit als Co-Stabilisator zu f), mit einem Brechungsindex $nD^{20}$=1,515 bis 1,525, und

h) 1 bis 2 Teile epoxidiertes Sojabohnenöl, sowie

i) zur Schwarzfärbung 0,5 bis 1,5 Teile Flammruß oder Gasruß, bzw.

j) Zur Weißfärbung 4 bis 8 Teile Titandioxid des Rutiltyps.

8. Bauteil nach einem der Ansprüche 1 bis 7, dadurch gekennzeichnet, daß der Hohlprofilschlauch (15) einen innenliegenden Quersteg (17) aufweist.

**Revendications**

1. Elément de cadre (1) avec panneau enchâssé (4) pour des châssis de fenêtre ou de porte constitué de barres profilées creuses (1) raccordées aux coins, comprenant une nervure (7) disposée de préférence à la face extérieure du cadre et une baguette de retenue (11) en matière plastique, en particulier en PVC dur résistant au choc, montée a posteriori, de préférence à la face intérieure du cadre, pour la fixation du panneau (4), par exemple une vitre (4), la nervure (7) aussi bien que la baguette de retenue (11) étant appliquées chacune avec un joint d'étanchéité souple (14, 15) sous précontrainte contre le panneau (4) et le joint d'étanchéité (14) de la baguette de retenue (11) étant coextrudé avec celle-ci, tandis que le joint d'étanchéité (15) de la nervure (7) est inséré dans une rainure (8) correspondante et présente un profil à grande élasticité lequel travaile essentiellement en flexion, caractérisé en ce qu'il présente les caractéristiques suivantes:

le joint d'étanchéité de la baguette de retenue (11) est conformé en appui (14) de la baguette de retenue (11) à faible élasticité dont la surface dirigée vers le panneau (4) est nervurée et qui travaille essentiellement en compression;

le joint d'étanchéité (15) inséré dans la nervure (7) est conformé en tuyau profilé creux (15);

le tuyau profilé creux (15) est constitué de caoutchouc synthétique à grande élasticité, en particulier d'APTK;

l'appui d'étanchéité (14) coextrudé avec la baguette de retenue (11) se compose des matières suivantes:

a) 40 à 60 parts, en particulier 50 parts, de polyéthylène chloré avec une teneur en chlore de 30 à 42%, en parculier 36%,

b) 20 à 30 parts de polychlorure de vinyle avec une valeur K de 58 à 78, de préférence 70, en une absorption de plastifiant d'au moins 30% (selon DIN 53 417, partie 1), et

c) 20 à 30 parts de caoutchouc nitrile NBR avec un rapport entre butadiène et acrylonitrile de 55:45 à 82:18, en particulier 67:33.

2. Elément selon la revendication 1, caractérisé en ce que l'appui d'étanchéité (14) de la baguette de retenue (11) est plat et muni sur sa face (22) dirigée vers le panneau (4) d'au moins un et de préférence deux bourrelets longitudinaux massifs (19, 20, 23, 24, 30, 31).

3. Elément selon la revendication 2, caractérisé en ce que les bourrelets longitudinaux (19, 20, 23, 24, 30, 31) présentent un profil et toit ou en dents de scie dont l'arête dirigée vers le panneau (4) est arrondie et dont les flancs enferment un angle qui n'est pas inférieur à 60° environ.

4. Elément selon la revendication 2, caractérisé en ce que le profil (30) du et respectivement de chaque bourrelet longitudinal est arrondi.

5. Elément de cadre selon l'une des revendications 1 à 4, caractérisé en ce que sur le côte de la baguette de retenue (11) opposé à la barre de cadre (1) associée est conformée, en supplément, une lèvre souple (22) appliquée contre le panneau (4).

6. Elément de cadre selon l'une des revendications 1 à 5, caractérisé en ce que sur le côté opposé du tuyau profilé creux (15) opposé à la barre de cadre (1) associée est conformée au moins une lèvre d'étanchéité (18) appliquée contre le panneau (4).

7. Elément de cadre selon l'une des revendications 1 à 6, caractérisé en ce que la garniture d'étancheité (14) coextrudée avec la baguette de retenue (11) contient au moins l'un des adjuvants suivants:

d) 0 à 0,5 part d'azodicarbonamide,

e) 0 à 20 parts de carbonate de calcium, non enrobé,

f) 1,5 à 2,5 parts de laurate de baryum et cadmium et/ou de stéarate de baryum et cadmium et/ou de myristinate de baryum et cadmium,

g) 0,4 à 0,6 part de phosphite organique comme stabilisateur de Co pour f), avec un indice de réfraction $nD^{20}=1,515$ à 1,525, et

h) 1 à 2 parts d'huile de soja époxydée, ainsi que

i) pour la coloration en noir, 0,5 à 1,5 part de suie ou de noir de fumée, et respectivement,

j) pour la coloration en blanc, 4 à 8 parts de dioxyde de titane du type rutile.

8. Elément selon l'une des revendications 1 à 7, caractérisé en ce que le tuyau profilé creux (15) comporte une traverse (17) placée à l'intérieur.

## Claims

1. A frame component (1) with an inserted filling (4) for window or door frames composed of hollow-section members (1) connected to one another at the corners,

having a rib (7), which is preferably disposed at the outside of the frame, and a plastics retaining strip (11), particularly of impact-resistant rigid PVC, which is inserted in the frame subsequently, preferably at the inside, to hold the filling (4), for example a pane of glass (4),

wherein both the rib (7) and the retaining strip (11) each rest with a flexible seal (14, 15) against the filling (4), under prestressing, and

wherein the seal (14) of the retaining strip (11) is coextruded with the latter,

while the seal (15) of the rib (7) is inserted in a corresponding groove (8) and has a section of high flexibility which is substantially subjected to bending stress,

characterised by the following features:

the seal of the retaining strip (11) is constructed in the form of a support (14) for the retaining strip (11), which support is ribbed at its surface adjacent to the filling (4), is subjected substantially to compressive stress and has little flexibility;

the seal (15) pushed into the rib (7) is constructed in the form of a hollow-section flexible tube (15);

the hollow-section flexible tube (15) consists of synthetic rubber with a high elastic flexibility, particularly of EPDM;

the sealing support (14) coextruded with the retaining strip (11) consists of the following materials:

(a) 40 to 60 parts, particularly 50 parts, of chlorinated polyethylene with a chlorine content of 30 to 42%, particularly 36%,

(b) 20 to 30 parts of polyvivyl chloride with a k-value of 58 to 78, preferably 70, and a plasticizer sorption of at least 30% (according to DIN 53417, part 1), and

(c) 20 to 30 parts of nitrile rubber NBR with a ratio of butadiene to acrylonitrile of from 55 to 45 to 82 to 18, particularly 67 to 33.

2. A component according to Claim 1, characterised in that the sealing support (14) of the retaining strip (11) is made flat and comprises, on its face (22) adjacent to the filling (4), at least one, preferably two solid longitudinal bulges (19, 20, 23, 24, 30, 31).

3. A component according to Claim 2, characterised in that the longitudinal bulges (19, 20, 23, 24, 31) have a roof-shaped or sawtooth-shaped profile of which the edge adjacent to the filling (4) is preferably rounded and the sides of which form an angle which is not less than about 60°.

4. A component according to Claim 2, characterised in that the profile (30) of the or of each longitudinal bulge is rounded.

5. A frame component according to any one of Claims 1 to 4, characterised in that a flexible lip (22) resting against the filling (4) is additionally formed on the side of the retaining strip (11) remote from the associated frame member (1).

6. A frame component according to any one of Claims 1 to 5, characterised in that at least one sealing lip (18) resting against the filling (4) is formed on the side of the hollow-section flexible tube (15) remote from the associated frame member (1).

7. A frame component according to any one of Claims 1 to 6, characterised in that the seal (14) coextruded with the retaining strip (11) contains at least one of the following additives:

(d) 0 to 0.5 parts of azodicarbonamide,

(e) 0 to 20 parts of calcium carbonate, uncoated,

(f) 1.5 to 2.5 parts of barium-cadmium-laurate and/or barium-cadmium stearate and/or barium-cadmium myristinate,

(g) 0.4 to 0.6 parts of organic phosphite as a co-stabilizer to f), with a refractive index $nD^{20}=1.515$ to 1.525, and

(h) 1 to 2 parts of epoxidized soya bean oil, as well as

(i) for black colouring, 0.5 to 1.5 parts of lamp black or carbon black, or

(j) for white colouring, 4 to 8 parts of titanium dioxide of the rutile type.

8. A component according to any of Claims 1 to 7, characterised in that the hollow-section flexible tube (15) comprises an internal transverse web (17).

FIG. 1

FIG. 2

FIG. 3

# FIG. 4